# EUROPÄISCHE PATENTSCHRIFT

(11) **EP 2 897 750 B1**
(45) Veröffentlichungstag und Bekanntmachung des Hinweises auf die Patenterteilung: **02.11.2016**
(21) Anmeldenummer: 13753882.3
(22) Anmeldetag: 02.09.2013
(51) Int. Cl.: B23C 5/10

(54) **SCHNEIDEINSATZ UND WERKZEUG ZUR SPANENDEN BEARBEITUNG EINES WERKSTÜCKS**
CUTTING INSERT AND TOOL FOR MACHINING A WORKPIECE
PLAQUETTE DE COUPE ET OUTIL POUR L'USINAGE D'UNE PIÈCE PAR ENLÈVEMENT DE COPEAUX

(30) Priorität: 18.09.2012 DE 102012108752
(43) Veröffentlichungstag der Anmeldung: 29.07.2015
(73) Patentinhaber: Hartmetall-Werkzeugfabrik Paul Horn GmbH, 72072 Tübingen (DE)
(72) Erfinder: STARK, Christian, 72108 Rottenburg-Hemmendorf (DE)
(74) Vertreter: Witte, Weller & Partner Patentanwälte mbB
(86) Internationale Anmeldenummer: PCT/EP2013/068089
(87) Internationale Veröffentlichungsnummer: WO 2014/044519

(56) Entgegenhaltungen:
- EP-A1- 1 572 407
- EP-A2- 0 278 389
- DE-A1- 1 602 795
- US-A1- 2006 045 636
- US-A1- 2006 104 736
- US-B1- 7 553 112

## Beschreibung

Die vorliegende Erfindung betrifft einen Schneideinsatz gemäß dem Oberbegriff des Anspruchs 1, insbesondere einen Tangentialschneideinsatz, für ein Werkzeug zur spanenden Bearbeitung eines Werkstücks. Des Weiteren betrifft die vorliegende Erfindung ein Werkzeug zur spanenden Bearbeitung eines Werkstücks, insbesondere zum Tangentialfräsen, mit einem Werkzeughalter, welcher mindestens eine Schneideinsatzaufnahme aufweist, in der ein erfindungsgemäßer Schneideinsatz lösbar befestigt ist.

Schneideinsätze der vorliegenden Art, welche allgemein auch als Wendeschneidplatten oder im Speziellen als Tangentialschneideinsätze bezeichnet werden, kommen meist bei Anwendungen zur Metallbearbeitung, insbesondere bei Fräs- oder Drehanwendungen, zum Einsatz. Hauptsächlich werden die vorliegenden Schneideinsätze zum Tangentialfräsen eingesetzt. Fräswerkzeuge, bei denen derartige Schneideinsätze zum Einsatz kommen, umfassen typischerweise einen rotationssymmetrischen Werkzeughalter, an dem umfangsseitig zumindest eine, meist jedoch eine Vielzahl dieser Schneidsätze lösbar befestigt sind.

Das Abtragen von Material am Werkstück während des Fräsvorgangs wird durch hochpräzise Schneiden bzw. Schneidkanten, welche in die Schneideinsätze eingeformt sind, gewährleistet. Um den Verschleiß möglichst gering zu halten, den sehr hohen bei der Verarbeitung auftretenden Schnittkräften standzuhalten und eine möglichst hohe Präzision zu gewährleisten, werden diese Schneideinsätze zumeist aus Hartmetall hergestellt. Durch die hohe Materialbeanspruchung verschleißen die Schneidkanten dennoch im Laufe der Zeit. Insbesondere bei Fräsbearbeitungen, die eine hohe Präzision voraussetzen, müssen die Schneideinsätze daher nach einer gewissen Zeit ausgetauscht werden.

Um zu verhindern, dass die relativ teuren Schneideinsätze jedes Mal gesamthaft ausgetauscht werden müssen, wenn die Schneiden verschlissen sind, wurden mehrseitige Schneideinsätze entwickelt, welche mehrere symmetrisch zueinander angeordnete Schneiden aufweisen. Eine solche Wendeschneidplatte mit vier identischen, symmetrisch zueinander angeordneten Hauptschneiden ist beispielsweise aus der EP 1 572 407 B1 bekannt. Diese Wendeschneidplatte weist die Merkmale des Oberbegriffes des Anspruchs 1 auf.

Die darin gezeigte Wendeschneidplatte ist bezüglich ihrer drei Hauptachsen jeweils 180° drehsymmetrisch ausgebildet. Sobald die verwendete Hauptschneidkante verschlissen ist, lässt sich die Wendeschneidplatte daher um 180° drehen und/oder wenden und in der neuen Position im Werkzeughalter befestigen. Beim Verschleiß einer der vier Hauptschneidkanten muss somit die Wendeschneidplatte nicht gesamthaft ausgetauscht werden, sondern nur im Halter gedreht bzw. gewendet werden, so dass die Bearbeitung mit den bisher nicht verwendeten, unverschlissenen Hauptschneidkanten fortgesetzt werden kann.

Aufgrund der Symmetrieeigenschaften der Wendeschneidplatte, bei der jede Hauptschneidkante die gleiche Schneidengeometrie aufweist, werden durch das Wenden bzw. Drehen der Wendeschneidplatte die Schnitteigenschaften nicht verändert. Mit anderen Worten lässt sich somit ein und dieselbe Wendeschneidplatte viermal verwenden, bis alle Schneidkanten verschlissen sind und die Wendeschneidplatte entsorgt werden muss.

Im Gegensatz zu einfachen, nicht wendbaren Schneideinsätzen bzw. Schneidplatten bieten derartige Wendeschneidplatten eine wesentlich höhere Flexibilität und können, dadurch dass sie mehrfach verwendbar sind, wesentlich länger verwendet werden, ohne dass dies mit Einbußen bei der Bearbeitungsgenauigkeit einhergeht. Wenngleich derartige vierschneidige Wendeschneidplatten deutlich komplexer in der Herstellung sind als herkömmliche, einschneidige (nicht wendbare) Schneidplatten, erweisen sich diese nicht nur als geschickter, sondern in der Gesamtbetrachtung auch als kostengünstiger für deren Abnehmer.

Aus Sicht des Herstellers solcher Wendeschneidplatten besteht die konstruktive Problematik jedoch nicht nur darin, die Symmetrieeigenschaften solcher Wendeschneidplatten mit mehreren identischen Schneiden zu realisieren, sondern gleichzeitig auch dafür zu sorgen, dass jede dieser Schneiden gleiche Bearbeitungseigenschaften aufweist und dadurch identisch verwendbar ist. Die größte Problematik besteht dabei oft darin, mögliche Kollisionen mit anderen Bauteilen der Schneidplatte oder des Werkzeughalters zu vermeiden und für einen sicheren Sitz der Schneidplatte in der Werkzeugaufnahme des Werkzeughalters zu sorgen, so dass eine optimale Krafteinleitung gewährleistet ist.

Insbesondere muss darauf geachtet werden, dass die zum jeweiligen Zeitpunkt nicht verwendeten Schneidkanten oder übrigen Bauteile der Schneidplatte nicht unerwünscht mit dem Werkstück kollidieren. Es darf also an Stellen der Schneidplatte, die für die spanende Bearbeitung des Werkstücks zum jeweiligen Zeitpunkt nicht verwendet werden sollen, nicht zu Kollisionen mit dem Werkstück kommen. Mit anderen Worten muss also darauf geachtet werden, dass die zum jeweiligen Zeitpunkt nicht verwendeten Schneidkanten freilaufen. Es erscheint einleuchtend, dass derartige Voraussetzungen bei Wendeschneidplatten mit mehreren, wechselweise verwendbaren Schneidkanten schwieriger zu realisieren sind, als dies bei herkömmlichen Schneidplatten mit nur einer Schneidkante der Fall ist.

Die oben erwähnten Symmetrieeigenschaften, der Freilauf der übrigen Schneidkanten sowie die Vermeidung von unerwünschten Kollisionen der Schneidplatte mit dem Werkstück wird bei der aus der EP 1 572 407 B1 bekannten Wendeschneidplatte dadurch gelöst, dass die Wendeschneidplatte zwei Teilkörper aufweist, welche gegenüber einander um eine Hauptachse der Wendeschneidplatte um einen vordefinierten Winkel verdreht sind. Die Hauptschneidkanten sind dabei jeweils zueinander um einen vordefinierten Winkel verdreht. Auf diese Weise lassen sich die geforderten Symmetrie- und Freilaufeigenschaften technisch nachhaltig gewährleisten. Anderseits entstehen bei einer solchen in sich verdrehten Wendeschneidplatte relativ viele komplex geformte Flächen. Insbesondere an den Haupteinsatzflächen entstehen durch eine derartige Verdrehung relativ komplexe Spanflächen, welche technisch sehr anspruchsvoll zu fertigen sind. Eine derart anspruchsvolle Fertigung ist, selbst wenn diese technisch realisierbar sein sollte, mit sehr hohen Fertigungskosten verbunden. Dies führt im Endeffekt zu hohen Stückkosten der Wendeschneidplatten für die Endabnehmer.

Der Erfindung liegt die Aufgabe zugrunde, einen Schneideinsatz der eingangs genannten Art bereitzustellen, der eine Alternative zu den oben genannten, aus dem Stand der Technik bekannten Wendeschneidplatten bietet und insbesondere einfacher herzustellen ist.

Diese Aufgabe wird, ausgehend von dem eingangs genannten Schneideinsatz, durch die Merkmale des Anspruchs 1 gelöst.

Die oben genannte Aufgabe wird dadurch vollständig gelöst.

Den Erfindern ist es gelungen, einen völlig neuartigen vierschneidigen Schneideinsatz bereitzustellen, der im Vergleich zu den aus dem Stand der Technik bekannten Schneideinsätzen nicht nur aus fertigungstechnischer Sicht, sondern auch aufgrund verbesserter Schnitteigenschaften vorteilhaft ist. Der erfindungsgemäße Schneideinsatz weist zwar, ähnlich wie der aus der EP 1 572 407 B1 bekannte Schneideinsatz, zwei identische miteinander verbundene Teilkörper auf und ist ebenso um eine zentral durch den Schneideinsatz verlaufende Bohrungsachse 180° drehsymmetrisch. Dennoch lässt sich der erfindungsgemäße Schneideinsatz weder aus konstruktiver Sicht noch aus geometrischer und fertigungstechnischer Sicht mit dem aus der EP 1 572 407 B1 bekannten Schneideinsatz vergleichen. Sowohl die Schneidengeometrie als auch die am Schneideinsatz angebrachten Anlageflächen, mit denen der Schneideinsatz am Werkzeughalter anliegt, sind beim erfindungsgemäßen Schneideinsatz völlig anders ausgestaltet. Im Gegensatz zu dem aus der EP 1 572 407 B1 bekannten Schneideinsatz ist der erfindungsgemäße Schneideinsatz auch nicht um alle seine Hauptachsen, sondern nur um die zentrale Bohrungsachse 180° drehsymmetrisch ausgestaltet. Alle vier am Schneideinsatz vorgesehenen identischen, geradlinig verlaufenden Hauptschneiden (Schneidkanten) sind dennoch identisch einsetzbar, ohne dass sich die Zerspanungs- oder Schnitteigenschaften beim Bearbeitungswechsel von einer Schneidkante auf die andere Schneidkante verändern.

An dieser Stelle ist festzuhalten, dass im Sinne der Erfindung "180° drehsymmetrisch" bedeutet, dass sich der Schneideinsatz bei Rotation um 180° um die Bohrungsachse wiederum auf sich selbst abbildet. Des Weiteren sei erwähnt, dass unter den vorliegend definierten "Teilkörpern" nicht separate, voneinander trennbare Bauteile des Schneideinsatzes verstanden werden sollen, sondern nur zum Ausdruck gebracht werden soll, dass der erfindungsgemäße Schneideinsatz aus zwei geometrisch identisch aufgebauten Körpern besteht, welche zusammen den Schneideinsatz bilden. Diese beiden Teilkörper sind vorliegend entlang der Mittelebene miteinander integral verbunden.

Jeder dieser Teilkörper weist jeweils eine der beiden parallel zueinander verlaufenden Grundflächen auf und wird an den quer dazu verlaufenden Raumseiten räumlich durch jeweils zwei gegenüberliegende Hauptseiten und zwei quer dazu angeordnete, einander ebenso gegenüberliegende Nebenseiten begrenzt. Mit Haupt- und Nebenseiten werden also jeweils zwei sich gegenüberliegende Raumseiten des jeweiligen Teilkörpers bezeichnet, welche gemeinsam mit der Grundfläche die Oberfläche jedes Teilkörpers begrenzen.

Jede dieser zwei Hauptseiten pro Teilkörper bzw. insgesamt vier Hauptseiten des Schneideinsatzes weisen eine an dieser angeordnete, geradlinig und parallel zur Mittelebene verlaufende Hauptschneide auf, an deren Enden sich jeweils eine erste und eine zweite Teilschneide anschließen. Die Begriffe "erste Teilschneide" und "zweite Teilschneide" sind jeweils nur als Bezeichnungen für unterschiedliche Teilschneiden des Schneideinsatzes zu verstehen, also keine zahlenmäßige Eingrenzung. Dementsprechend besitzt der erfindungsgemäße Schneideinsatz insgesamt nicht nur vier Hauptschneiden, sondern auch vier erste Teilschneiden und vier zweite Teilschneiden. Die ersten und zweiten Teilschneiden werden vorliegend nur aufgrund deren geometrischer und größenmäßiger Unterschiede auseinandergehalten. Die ersten und zweiten Teilschneiden sind an den acht räumlich außen liegenden Ecken des Schneideinsatzes angeordnet. Gemäß einer bevorzugten Ausgestaltung der Erfindung sind die ersten und zweiten Teilschneiden jeweils als Eckenradien oder Fasen ausgestaltet. Da das Werkstück auch mit diesen Eckenradien oder Eckenfasen spanend bearbeitet werden kann, werden diese vorliegend als erste und zweite Teilschneiden bezeichnet.

Ein wesentliches Merkmal des erfindungsgemäßen Schneideinsatzes ist darin zu sehen, dass die erwähnten ersten und zweiten Teilschneiden an den an jeder Nebenseite jedes Teilkörpers vorgesehenen ersten und zweiten Vorsprüngen angeordnet sind. Die Bezeichnungen "erste Vorsprünge" und zweite Vorsprünge" sind dabei wiederum lediglich als Name oder Definition für jeweils gleich geformte bzw. gleich große Vorsprünge anzusehen bzw. als Unterscheidung für zwei unterschiedliche Arten von Vorsprüngen, nämlich erste und zweite Vorsprünge, welche an den Nebenseiten jedes Teilkörpers im Bereich der Ecken des Schneideinsatzes angeordnet sind. Vorliegend grenzen jeweils ein erster Vorsprung und jeweils ein zweiter Vorsprung an die an derselben Nebenseite angeordnete planare Anlagefläche endseitig an und stehen gegenüber dieser hervor. Unter den ersten und zweiten Vorsprüngen werden also jeweils an den Nebenseiten jedes Teilkörpers angeordnete Materialvorsprünge bzw. Materialerhebungen verstanden, welche gegenüber den angrenzenden Anlageflächen seitlich hervorstehen.

Diese Vorsprünge werden vorliegend dafür verwendet, dass an den Nebenschneiden Freiwinkel entstehen, welche die notwendigen Freilaufeigenschaften des Schneideinsatzes garantieren sollen. In die ersten und zweiten Vorsprünge sind also mit anderen Worten die für die während der Bearbeitung geforderten Freilaufeigenschaften des Schneideinsatzes notwendigen Freiwinkel eingeformt. Dies geschieht im Wesentlichen dadurch, dass jeder Vorsprung planare und/oder komplex geformte Flächen aufweist, welche gegenüber den benachbarten Anlageflächen sowie gegenüber den benachbarten Nebenschneiden geneigt sind, so dass in den Ecken des Schneideinsatzes jeweils mehrere Freiwinkel entstehen. Aufgrund der Anordnung bzw. Einformung der Freiwinkel in diese ersten und zweiten Vorsprünge muss der Schneideinsatz nicht allzu stark in sich verdreht werden, um eine Kollision mit den während der Bearbeitung nicht verwendeten Bauteilen des Schneideinsatzes wirksam zu vermeiden. Im Übrigen entstehen hierdurch wesentlich weniger komplex geformte Flächen auf der Außenhülle des Schneideinsatzes, wie dies beispielsweise bei dem aus der EP 1 572 407 B1 bekannten Schneideinsatz der Fall ist. Dies macht insbesondere die Fertigung des Schneideinsatzes einfacher und damit kostengünstiger.

Durch die an den Nebenseiten jedes Teilkörpers angebrachten ersten und zweiten Vorsprünge, in welche die Freiwinkel integriert sind, ist es also gelungen, die Symmetrieeigenschaften des Schneideinsatzes zu bewahren und dennoch die Freilaufeigenschaften zu gewährleisten. Der erfindungsgemäße Tangentialschneideinsatz lässt sich somit in vier verschiedenen Positionen in dem Werkzeughalter einsetzen, so dass die vier Hauptschneiden nacheinander einsetzbar sind, ohne dass sich dabei die Schnitt- bzw. Geometrieeigenschaften ändern.

Ein weiteres zentrales Merkmal des erfindungsgemäßen Schneideinsatzes beruht darauf, dass die beiden Hauptschneiden jedes Teilkörpers parallel zu den beiden Anlageflächen des jeweils anderen Teilkörpers verlaufen. Dies wirkt sich nicht nur günstig auf die Symmetrieeigenschaften des Schneideinsatzes aus, sondern ermöglicht es, den Schneideinsatz sicher und in mechanisch stabiler Position in einer dafür vorgesehenen Schneideinsatzaufnahme am Werkzeughalter zu fixieren. Derartige Anlageflächen sind bei den aus dem Stand der Technik bekannten Schneidsätzen häufig nicht parallel zu den Hauptschneiden bzw. Schneidkanten ausgestaltet. Dies erhöht insbesondere die Komplexität des Plattensitzes, was sich wiederum negativ auf die Fertigung und teilweise sogar negativ auf die letztendlich bei der Bearbeitung entstehenden Schnitt- bzw. Spaneigenschaften auswirkt.

An dieser Stelle sei angemerkt, dass es sich bei der zur geometrischen Beschreibung des Schneideinsatzes verwendeten "Mittelebene" um eine gedachte, imaginäre Hilfsebene handelt, welche nicht tatsächlich, körperlich vorhanden ist.

Gemäß einer bevorzugten Ausgestaltung der vorliegenden Erfindung hat der Schneideinsatz, in einer Draufsicht entlang der Bohrungsachse betrachtet, im Wesentlichen die Form eines Rhomboids. Vorzugsweise sind insbesondere die beiden identischen, sich gegenüberliegenden Grundflächen des Schneideinsatzes jeweils planar ausgestaltet und weisen im Wesentlichen die Form eines Rhomboids auf.

Unter einem "Rhomboid" wird ein Parallelogramm verstanden, welches vier Seiten aufweist. Die gegenüberliegenden Seiten dieses Parallelogramms sind dabei parallel und gleich lang, wobei keine der vier Ecken einen rechten Winkel bildet. Die Summe aller Eckenwinkel beträgt jedoch 360°. Ein solches Rhomboid hat zwei Diagonalen, die unterschiedlich lang sind und sich schief, also nicht rechtwinklig, schneiden. Ein Rhomboid unterscheidet sich somit von einer gleichseitigen Raute.

Es sei jedoch angemerkt, dass der erfindungsgemäße Schneideinsatz in der beschriebenen Draufsicht nicht exakt die Form eines Rhomboids aufweist. Insbesondere in den Ecken des Schneideinsatzes weicht dieser von der Idealform eines Rhomboids zumindest teilweise ab. Dies liegt im Wesentlichen an den bereits oben erwähnten ersten und zweiten Vorsprüngen, welche an den Ecken des Schneideinsatzes abstehen. Auch die vorzugsweise planar ausgestalteten Grundflächen weichen geringfügig von der Form eines Rhomboids ab. Sie haben also nur im Wesentlichen die Form eines Rhomboids.

Die rhombische Form des Schneideinsatzes mit den daran angeordneten ersten und zweiten Vorsprüngen, welche die Freiwinkel definieren, hat den Vorteil, dass sich auf diese Weise die geforderten Freilauf- und Symmetrieeigenschaften auf günstige Art und Weise realisieren lassen. Durch die im Wesentlichen rhombische Form des Schneideinsatzes entstehen relativ wenige komplex geformte Flächen, welche schwierig zu fertigen sind. Die vier Haupteinsatzseiten des Schneideinsatzes können somit identisch sein. Ebenso müssen nur wenig schräge oder konvexe Flächen in den Schneideinsatz eingeschliffen werden, was den Bearbeitungsaufwand während der Fertigung erheblich senkt.

Gemäß einer weiteren bevorzugten Ausgestaltung der vorliegenden Erfindung lässt sich einer der beiden Teilkörper durch Rotation um 180° um eine in der Mittelebene liegende Drehachse und eine anschließende Rotation um einen Hauptschneidenwinkel um die Bohrungsachse auf den jeweils anderen Teilkörper abbilden, wobei der beschriebene Hauptschneidenwinkel ein Winkel ist, den die Hauptschneiden eines Teilkörpers mit den Hauptschneiden des jeweils anderen Teilkörpers einschließen.

Die beiden Teilkörper sind also nicht spiegelverkehrt bezüglich der Mittelebene. Vielmehr sind beide Teilkörper geometrisch und konstruktiv identische Teilkörper, welche sich entlang der Mittelebene berühren. Das oben genannte Abbildungsverhältnis soll lediglich deren räumliche Orientierung zueinander beschreiben.

Insgesamt entsteht ein Schneideinsatz, dessen Körper zwei gegenüberliegende identische Grundflächen aufweist sowie von vier identischen, zwischen diesen Grundflächen verlaufenden Haupteinsatzflächen begrenzt ist. Jede dieser Haupteinsatzflächen weist jeweils eine Nebenseite des einen Teilkörpers und eine Hauptseite (inklusive Hauptschneide) des anderen Teilkörpers auf. Gegenüberliegende Haupteinsatzflächen weisen jeweils Hauptschneiden desselben Teilkörpers auf, wohingegen bei benachbarten Haupteinsatzflächen die Hauptschneide einmal am unteren Rand und einmal am oberen Rand der Haupteinsatzfläche angeordnet ist.

Gemäß einer weiteren bevorzugten Ausgestaltung sind die ersten Vorsprünge größer ausgestaltet als die zweiten Vorsprünge. Sowohl die ersten und zweiten Teilschneiden, also die Eckenradien oder Fasen, als auch die sich daran anschließenden Nebenschneiden sind dagegen vorzugsweise gleich groß ausgestaltet.

Der Grund hierfür liegt in den einzuhaltenden Freilaufeigenschaften, also um Kollisionen zu vermeiden. Je nach Fräsanwendung kann mit dem Schneideinsatz gemäß dieser Ausgestaltung somit über beide Ecken (über beide Teilschneiden) geschnitten werden bzw. bei Tangentialnutfräswerkzeugen, bei denen mehrere Schneideinsätze axial versetzt zueinander sind, drückt die jeweils hervorstehende Ecke, an welcher die erste Teilschneide angeordnet ist (zusätzlich bedingt durch den größeren ersten Freiwinkel), nicht ungewollt gegen das Werkstück. Dies reduziert den Freiflächenverschleiß.

Gemäß einer weiteren bevorzugten Ausgestaltung weist jeder erste Vorsprung jeweils eine erste Freifläche auf, welche an eine erste Nebenschneide angrenzt und an der jeweiligen ersten Nebenschneide einen ersten Freiwinkel erzeugt. Jeder zweite Vorsprung weist dementsprechend jeweils eine zweite Freifläche auf, welche an eine zweite Nebenschneiden angrenzt und an der jeweiligen zweiten Nebenschneide einen zweiten Freiwinkel erzeugt. Die erste Nebenschneiden schließen sich jeweils an die ersten Teilschneiden an. Die zweiten Nebenschneiden schließen sich jeweils an die zweiten Teilschneiden an. Vorzugsweise ist die erste Freifläche größer ausgestaltet als die zweite Freifläche und der erste Freiwinkel größer als der zweite Freiwinkel. Es versteht sich jedoch, dass der Flächeninhalt der ersten Freifläche nur minimal größer ist als der Flächeninhalt der zweiten Freifläche.

Die Gründe hierfür liegen wiederum in den geforderten Symmetrieeigenschaften und den zwingend zu realisierenden Freilaufeigenschaften während der Verwendung des Schneideinsatzes zur spanabhebenden Bearbeitung.

Die ersten und zweiten Freiwinkel verhindern jeweils eine Kollision der übrigen während der Bearbeitung nicht verwendeten Schneidkanten bzw. der Ecken des Schneideinsatzes mit dem Werkstück. Erfindungsgemäß liegen die ersten und zweiten Freiwinkel jeweils im Bereich von 1° bis 10°, vorzugsweise im Bereich von 1° bis 5°.

Durch die bei dem erfindungsgemäßen Schneideinsatz gewählte Schneidengeometrie wird bei der Bearbeitung eines Werkstücks ein so genannter positiv-ziehender Schnitt erzeugt. Von einem positiv-ziehenden Schnitt spricht man, wenn die Spanabfuhr über die Spanfläche in Richtung weg vom abnehmenden Material erfolgt (entgegengesetzt zu der bei der Berarbeitung entstehenden Nutwand). Ein solcher positiv-ziehender Schnitt ist im Gegensatz zu dem entgegengesetzt verlaufenden negativziehenden Schnitt im Hinblick auf die Spanbildungseigenschaften von Vorteil.

Gemäß einer weiteren Ausgestaltung der vorliegenden Erfindung haben alle vier Hauptschneiden des Schneideinsatzes jeweils einen ersten Abstand von der Bohrungsachse und alle vier Anlageflächen des Schneideinsatzes jeweils einen zweiten Abstand von der Bohrungsachse, wobei der erste Abstand kleiner ist als der zweite Abstand.

Es versteht sich, dass unter "Abstand" der senkrechte Abstand von der Bohrungsachse verstanden werden soll. Die Anlageflächen eines Teilkörpers stehen somit gegenüber den Hauptschneiden des jeweils anderen Teilkörpers nach vorne hin ab; sie sind also weiter von der Bohrungsachse entfernt als die Hauptschneiden. Anders herum ausgedrückt sind die Hauptschneiden gegenüber den Anlageflächen also weiter nach innen, in Richtung zur zentralen Bohrungsachse versetzt.

Des Weiteren ist es bevorzugt, dass die Hauptschneiden einen geringeren Abstand von der Mittelebene haben als die Grundflächen. Die beiden Hauptschneiden jedes Teilkörpers liegen dabei jeweils in einer gemeinsamen Hauptschneiden-Ebene (imaginäre Hilfsebene), welche parallel zur Mittelebene verläuft. Durch diesen höhenmäßigen Versatz zwischen den Grundflächen und den beiden Hauptschneiden des jeweiligen Teilkörpers entsteht zwischen den Hauptschneiden jedes Teilkörpers und der Grundfläche desselben Teilkörpers jeweils eine im Wesentlichen planare Hauptfreifläche, welche gegenüber der jeweiligen Hauptschneiden-Ebene geneigt ist.

Diese planare Hauptfreifläche ist wiederum zur Gewährleistung der erforderlichen Freilaufeigenschaften des Schneideinsatzes notwendig, da ansonsten die Grundflächen des Schneideinsatzes bei der Bearbeitung mit dem Werkstück kollidieren könnten. Der Neigungswinkel, den die Hauptfreiflächen mit der daran angrenzenden Grundfläche einschließen, ist vorzugsweise im Bereich von 5°.

Des Weiteren weist der erfindungsgemäße Schneideinsatz vorzugsweise eine Durchgangsbohrung auf, welche orthogonal zu den Grundflächen verläuft und diese durchbricht. Diese Durchgangsbohrung dient im Wesentlichen der Befestigung des Schneideinsatzes im Werkzeughalter. Dazu wird vorzugsweise ein Befestigungsmittel, insbesondere eine Schraube, durch diese Durchgangsbohrung hindurchgeführt und am Werkzeughalter befestigt.

Da sich die vorliegende Erfindung nicht nur auf den Schneideinsatz selbst, sondern auch auf das Werkzeug bezieht, bei dem dieser Schneideinsatz Anwendung findet, sei abschließend diesbezüglich noch Folgendes erwähnt: Der in der Schneideinsatzaufnahme des Werkzeughalters eingesetzte Schneideinsatz ist gemäß der vorliegenden Erfindung derart um eine Radialrichtung des Werkzeughalters um einen definierten Schneidenverdrehwinkel verdreht angeordnet, dass die zur Bearbeitung verwendete Hauptschneide diesen Schneidenverdrehwinkel mit einer Ebene einschließt, welche durch die Radialrichtung und eine Drehachse des Werkzeughalters definiert ist. Die zur Bearbeitung verwendete Hauptschneide wird also, anders ausgedrückt, gegenüber der Bearbeitungs- bzw. Rotationsrichtung des Fräswerkzeuges leicht gedreht angeordnet. Dadurch entsteht der Schneidenverdrehwinkel, welcher aufgrund seiner Anordnung auch als Axialwinkel bezeichnet wird.

Die Drehung der Wendeschneidplatte bzw. des Schneideinsatzes innerhalb des Werkzeughalters hat im Wesentlichen den Zweck, Kollisionen mit den nicht verwendeten Schneidkanten bzw. auch Kollisionen mit den oben beschriebenen ersten und zweiten Vorsprüngen zu vermeiden.

An dieser Stelle sei angemerkt, dass die Verwendung des erfindungsgemäßen Schneideinsatzes vorwiegend hauptsächlich am Beispiel eines Tangentialnutfräswerkzeugs beschrieben ist. Der erfindungsgemäße Schneideinsatz lässt sich grundsätzlich jedoch ebenso auch in Schaftfräsern oder in einem Drehhalter verwenden. Der erfindungsgemäße Schneideinsatz ist daher nicht auf die vorliegend beschriebene Anwendung beschränkt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen
- Fig. 1: eine perspektivische Ansicht einer ersten Ausführungsform des erfindungsgemäßen Schneideinsatzes,
- Fig. 2: eine Draufsicht der ersten Ausführungsform des erfindungsgemäßen Schneideinsatzes von oben,
- Fig. 3: eine Draufsicht der ersten Ausführungsform des erfindungsgemäßen Schneideinsatzes von vorne,
- Fig. 4: eine weitere Draufsicht der ersten Ausführungsform des erfindungsgemäßen Schneideinsatzes von der Seite,
- Fig. 5: eine Schnittansicht der ersten Ausführungsform des erfindungsgemäßen Schneideinsatzes (Schnitt B-B),
- Fig. 6: eine weitere Schnittansicht der ersten Ausführungsform des erfindungsgemäßen Schneideinsatzes (Schnitt A-A),
- Fig. 7: eine Detailansicht aus Fig. 6,
- Fig. 8: eine perspektivische Ansicht eines erfindungsgemäßen Werkzeughalters ohne den darin eingesetzten erfindungsgemäßen Schneideinsatz,
- Fig. 9: eine perspektivische Ansicht des erfindungsgemäßen Werkzeughalters mit darin eingesetztem Schneideinsatz,
- Fig. 10: eine seitliche Draufsicht des erfindungsgemäßen Werkzeughalters mit eingesetztem Schneideinsatz,
- Fig. 11: eine weitere seitliche Draufsicht des erfindungsgemäßen Werkzeughalters mit eingesetztem Schneideinsatz, und
- Fig. 12: eine Schnittansicht des erfindungsgemäßen Werkzeughalters mit eingesetztem Schneideinsatz.

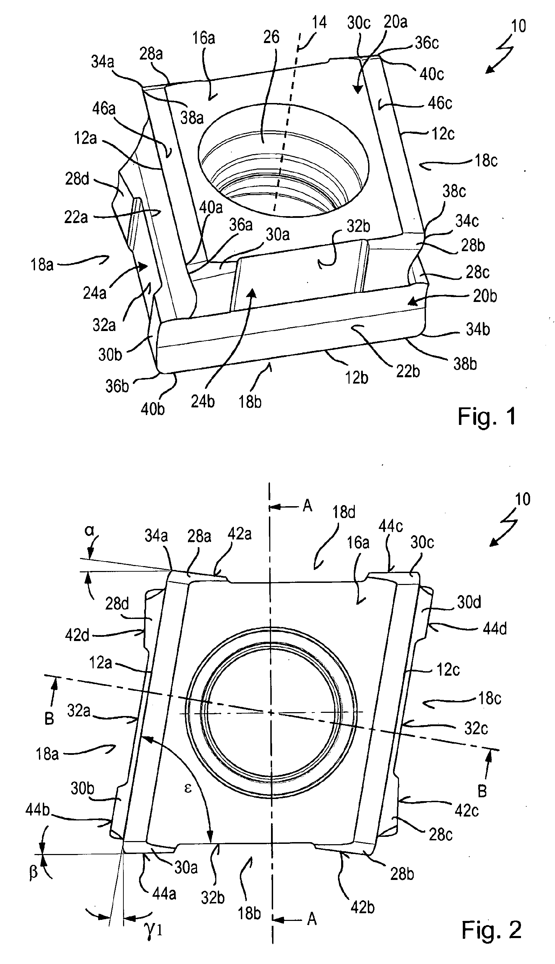

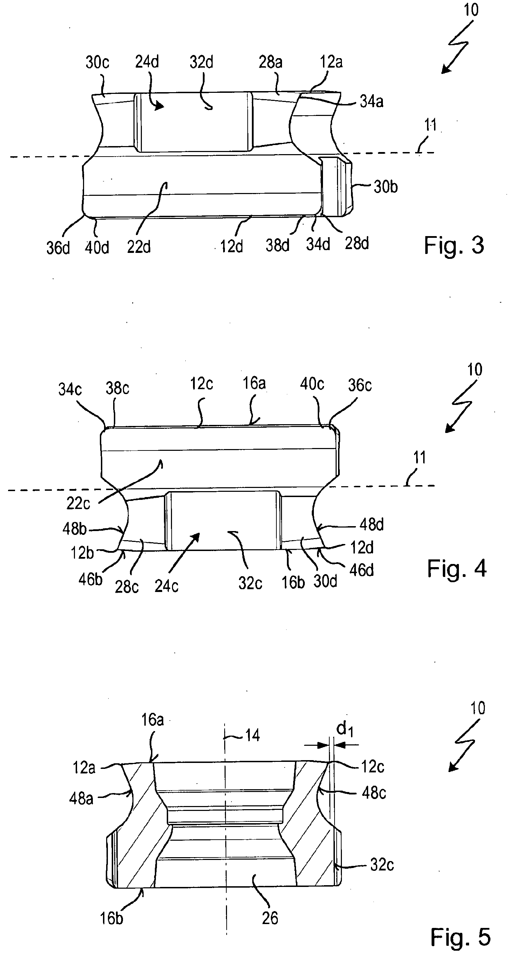

Die Fig. 1 bis 6 zeigen eine Ausführungsform des erfindungsgemäßen Schneideinsatzes in verschiedenen Ansichten, wobei der Schneideinsatz gesamthaft mit der Bezugsziffer 10 gekennzeichnet ist. Aus der in Fig. 1 dargestellten perspektivischen Ansicht wird ersichtlich, dass es sich hierbei um eine vierschneidige Wendeschneidplatte 10 handelt, mit vier identischen geradlinig verlaufenden Hauptschneiden 12a-d (Hauptschneide 12d in Fig. 1 verdeckt dargestellt, siehe dazu zum Beispiel Fig. 3).

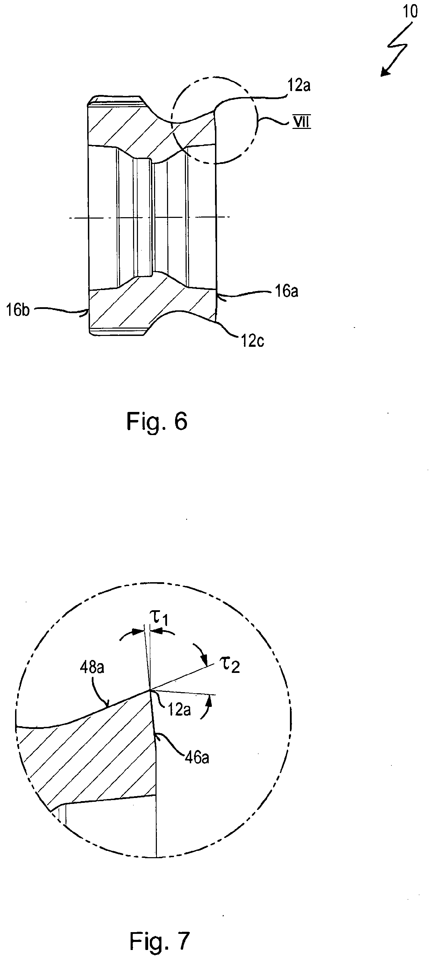

Aufgrund seines Haupteinsatzzweckes, nämlich das Tangentialfräsen bzw. Tangentialnutfräsen, wird diese Art von Schneideinsatz 10 auch als Tangentialschneideinsatz bezeichnet. Die äußere Form des Schneideinsatzkörpers wird durch sechs Seiten begrenzt: zwei Stirnseiten, in welchen jeweils eine planare und orthogonal zu einer zentral durch den Schneideinsatz 10 verlaufenden Bohrungsachse 14 ausgerichtete Grundfläche 16a, 16b liegt (Grundfläche 16b in Fig. 1 verdeckt dargestellt, siehe dazu zum Beispiel Fig. 5 und 6). Weiterhin wird die Außenseite des Schneideinsatzkörpers durch vier identische, zwischen den Grundflächen 16a, 16b verlaufende Haupteinsatzseiten 18a-d begrenzt. An jeder dieser Haupteinsatzseiten 18a-d ist jeweils eine Hauptschneide 12a-d angeordnet.

Ebenso ist insbesondere aus Fig. 1 ersichtlich, dass der Schneideinsatz 10 aus zwei identischen Teilkörpern 20a, b aufgebaut ist. Die Aufteilung in die beiden Teilkörper 20a, b soll nachfolgend lediglich zur Vereinfachung der Beschreibung des Schneideinsatzes 10 dienen. Diese induziert jedoch nicht, dass es sich hierbei um zwei separate, also getrennte Bauteile handelt. Die Aufteilung des Schneideinsatzes 10 in zwei identische Teilkörper 20a, b erscheint jedoch insbesondere aus der Betrachtung der Fig. 1 zweckmäßig. Beide Teilkörper 20a, b sind entlang einer gedachten Mittelebene 11, welche orthogonal zu der Bohrungsachse 14 verläuft und jeweils den gleichen Abstand zu beiden Grundflächen 16a, b hat, miteinander verbunden. Diese Mittelebene teilt den Schneideinsatz 10 also imaginär in zwei identische Teilkörper, einen ersten Teilkörper 20a und einen zweiten Teilkörper 20b.

Jeder dieser Teilkörper 20a, b weist zwei identische einander gegenüberliegende Hauptseiten 22a-d auf, an welchen die Hauptschneiden 12a-d angeordnet sind, und zwei quer dazu verlaufende ebenfalls einander gegenüberliegende, identische Nebenseiten 24a-d auf. Die Hauptseiten 22a und 22c liegen einander gegenüber und gehören zum ersten Teilkörper 20a. Ebenso liegen sich die zum ersten Teilkörper 20a gehörigen Nebenseiten 24b und 24d einander gegenüber. Dagegen gehören die Hauptseiten 22b und 22d sowie die Nebenseiten 24a und 24c zum zweiten Teilkörper 20b.

Da auf jeder der vier identischen Haupteinsatzseiten 18a-d des Schneideinsatzes 10 also jeweils eine Hauptseite 22a-d des einen Teilkörpers 20a, b und jeweils eine Nebenseite 24a-d des anderen Teilkörpers 20a, b angeordnet ist, ergibt sich insgesamt eine 180°-Drehsymmetrie des Schneideinsatzes 10. Die Haupteinsatzseite 18a beinhaltet beispielsweise die Hauptseite 22a des oberen Teilkörpers 20a sowie die Nebenseite 24a des unteren Teilkörpers 20b. Genauso beinhaltet die Haupteinsatzseite 18b die Nebenseite 24b des oberen Teilkörpers 20a sowie die Hauptseite 22b des unteren Teilkörpers 20b, etc.

Aufgrund der vier identischen Haupteinsatzseiten 18a-d und der bereits erwähnten 180°-drehsymmetrischen Eigenschaften des Schneideinsatzes 10 um die Bohrungsachse 14 lässt dieser sich also in vier verschiedenen Positionen im Werkzeughalter einsetzen, ohne dass es dabei zu einer Veränderung der Schnittgeometrie oder der Schnitteigenschaften kommt. Beispielsweise ließe sich zunächst die Hauptschneide 12a zur spanabhebenden Bearbeitung verwenden. Sobald diese verschlissen ist, kann der Schneideinsatz 10 um 180° um die Bohrungsachse 14 gedreht werden, so dass dann die Hauptschneide 12c zum Einsatz kommt. Um dann die beiden Hauptschneiden 12b und 12c zum Einsatz kommen zu lassen, muss der Schneideinsatz nur um eine in der Mittelebene 11 liegende, orthogonal zur Bohrungsachse 14 ausgerichtete Achse gewendet werden und in entsprechender Weise wieder am Werkzeughalter befestigt werden, so dass eine der Hauptschneiden 12b, d zum Werkstück hin ausgerichtet ist. Es versteht sich, dass der Schneideinsatz 10 dazu jeweils vom Werkzeughalter gelöst und in seiner neuen Position erneut befestigt werden muss.

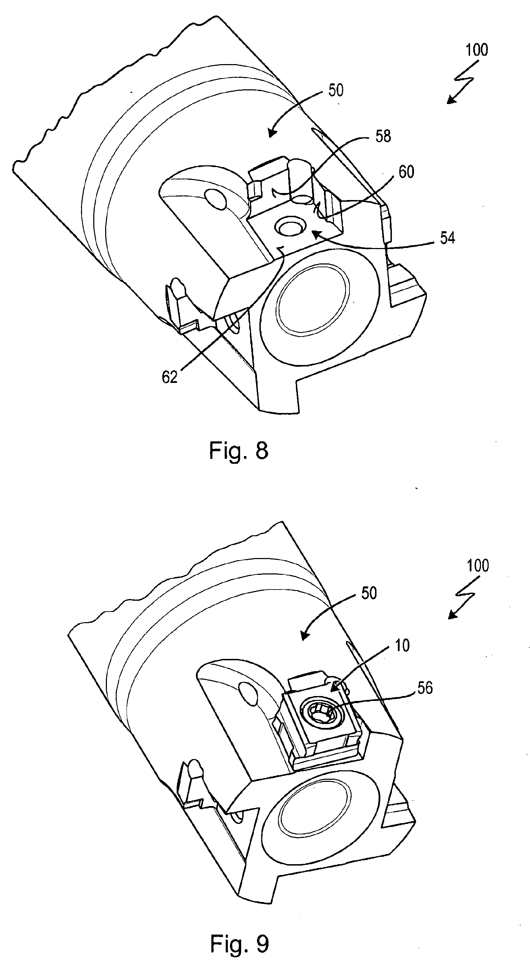

Die Befestigung des Schneideinsatzes 10 am Werkzeughalter geschieht vorzugsweise durch ein Befestigungselement, beispielsweise eine Schraube, wie dies aus den Fig. 8 bis 12 ersichtlich ist, auf die weiter unten noch näher eingegangen wird. Diese Schraube lässt sich dazu in die mittig in den Schneideinsatz 10 eingebrachte Durchgangsbohrung 26 einsetzen. Die Durchgangsbohrung 26 verläuft vorzugsweise exakt orthogonal zu den beiden Grundflächen 16a, b, also entlang der Bohrungsachse 14. Es versteht sich jedoch, dass auch andere Befestigungsmöglichkeiten ohne Weiteres denkbar sind, ohne den Rahmen der vorliegenden Erfindung zu verlassen.

Nachfolgend soll auf die für die Erfindung wesentlichen Merkmale und auf die konstruktiven Details des erfindungsgemäßen Schneideinsatzes 10 näher eingegangen werden. Ein zentraler Punkt des erfindungsgemäßen Schneideinsatzes 10 ist in den an jeder Nebenseite 24a-d beider Teilkörper 20a, b angeordneten ersten Vorsprüngen 28a-d und zweiten Vorsprüngen 30a-d zu sehen. An jeder Nebenseite 24a-d sind endseitig jeweils ein erster Vorsprung 28a-d und jeweils ein zweiter Vorsprung 30a-d angeordnet. Die ersten und zweiten Vorsprünge 28a-d bzw. 30a-d jeder Nebenseite 24a-d sind voneinander jeweils durch eine in derselben Nebenseite liegende Anlagefläche 32a-d getrennt. Die Anlageflächen 32a-d sind jeweils planar ausgestaltet und verlaufen orthogonal zu der bereits oben erwähnten imaginären Mittelebene 11, welche den Schneideinsatz 10 in die beiden Teilkörper 20a, b aufteilt. Wenn man zum Beispiel die in Fig. 1 gut ersichtliche Nebenseite 24b des oberen Teilkörpers 20a betrachtet, so weist diese an ihrem in der Zeichnung dargestellten rechten Ende einen ersten Vorsprung 28b und an ihrem linken Ende einen zweiten Vorsprung 30a auf. Dazwischen verläuft die Anlagefläche 32b. In gleicher Weise sind auch die übrigen Nebenseiten 24a, 24c und 24d ausgestaltet.

Sowohl die ersten Vorsprünge 28a-d als auch die zweiten Vorsprünge 30a-d stehen, wie in den Zeichnungen dargestellt, gegenüber den Anlageflächen 32a-d aus den jeweiligen Nebenseiten 24a-d hervor. Sie bilden also eine Materialerhöhung. Wie aus Fig. 1 des Weiteren ersichtlich ist, bleiben die oben erwähnten Symmetrieeigenschaften des Schneideinsatzes 10 durch die wechselseitige Anordnung der ersten und zweiten Vorsprünge 28a-d bzw. 30a-d in den endseitigen Ecken des Schneideinsatzes 10 erhalten.

Die ersten und zweiten Vorsprünge 28a-d bzw. 30a-d erzeugen erste und zweite Teilschneiden 34a-d bzw. 36a-d, welche jeweils endseitig an die geradlinig verlaufenden Hauptschneiden 12a-d angrenzen. Jede Hauptschneide 12a-d geht also an ihrem jeweiligen ersten Ende 38a-d in eine erste Teilschneide 34a-d über sowie an ihrem zweiten Ende 40a-d in eine zweite Teilschneide 36a-d über. Dies sei vorliegend anhand eines Beispiels, welches insbesondere aus dem oberen linken Teil der Fig. 1 ersichtlich wird, nochmals näher erläutert: Die Hauptschneide 12a geht beispielsweise an ihrem ersten Ende 38a in die erste Teilschneide 34a über. Diese erste Teilschneide 34a ist an dem ersten Vorsprung 28a angeordnet. An dem gegenüberliegenden Ende 40a geht die Hauptschneide 12a in die zweite Teilschneide 36a über, welche an dem zweiten Vorsprung 30a angeordnet ist. Die ersten und zweiten Teilschneiden 34a-d bzw. 36a-d sind jeweils entweder als Eckenradien oder Fasen ausgestaltet. Da das Werkstück auch mit diesen Eckenradien oder Eckenfasen spanend bearbeitet werden kann, werden diese vorliegend als erste und zweite Teilschneiden 34a-d bzw. 36a-d bezeichnet.

Die zwei unterschiedlichen Arten von Vorsprüngen 28a-d bzw. 30a-d unterscheiden sich vorzugsweise in Form und Größe. Die zwei unterschiedlichen Arten von Teilschneiden 34a-d bzw. 36a-d sind dagegen vorzugsweise gleich groß ausgestaltet.

Vorzugsweise sind die ersten Vorsprünge 28a-d größer ausgestaltet als die zweiten Vorsprünge 30a-d. Die geometrisch bzw. größenmäßig unterschiedliche Ausgestaltung der Vorsprünge 28a-d bzw. 30a-d dient im Wesentlichen dazu, die aufgrund der Komplexität des Schneideinsatzaufbaus relativ schwierig zu gewährleistenden Freilaufeigenschaften für die während der jeweiligen Bearbeitung nicht verwendeten Bauteile und Schneidkanten zu garantieren, also um Kollisionen zu vermeiden. Mit anderen Worten werden die für die Freilaufeigenschaften des Schneideinsatzes 10 während der Bearbeitung notwendigen Freiwinkel direkt in die ersten bzw. zweiten Vorsprünge 28a-d, 30a-d eingeformt. Bei aus dem Stand der Technik bekannten Schneideinsätzen dieser Art werden diese Freiwinkel meist durch eine relativ starke Verdrehung des Schneideinsatzes 10 in sich oder durch eine komplex ausgestaltete Schneidengeometrie gewährleistet. Eine Einbringung der Freiwinkel, wie vorgeschlagen, in derartige nasenförmige an den Ecken des Schneideinsatzes 10 hervorstehende Vorsprünge 28a-d, 30a-d kann jedoch aus fertigungstechnischer Sicht Vorteile haben. Im Übrigen hat sich der erfindungsgemäße Schneideinsatz 10 auch im Hinblick auf die Bearbeitungs- und Spanbildungseigenschaften als vorteilhaft herausgestellt.

Wie beispielsweise aus der in Fig. 2 dargestellten Ansicht ersichtlich ist, werden die in den Ecken des Schneideinsatzes 10 erzeugten Freiwinkel durch an den ersten bzw. zweiten Vorsprüngen 28a-d bzw. 30a-d vorgesehene erste und zweite Freiflächen 42a-d bzw. 44a-d realisiert. Diese ersten Freiflächen 42a-d sind jeweils an den ersten Vorsprüngen 28a-d angeordnet. Die zweiten Freiflächen 44a-d sind dagegen an den zweiten Vorsprüngen 30a-d angeordnet.

Ein an den ersten Freiflächen 42a-d entstehender erster Freiwinkel ist in Fig. 2 als Winkel α bezeichnet. Ebenso zeigt Fig. 2 einen an den zweiten Freiflächen 44a-d entstehenden zweiten Freiwinkel β. In Fig. 2 ist der zweite Freiwinkel β allerdings nur schematisch dargestellt, da er gemäß der hier dargestellten Ausführungsform eine Größe von 0° besitzt. Allerdings sind auch andere Winkelgrößen grundsätzlich denkbar. Vorzugsweise wird sowohl der erste Freiwinkel α als auch der zweite Freiwinkel β im Bereich von 0 bis 10°, insbesondere im Bereich von 0 bis 5° gewählt.

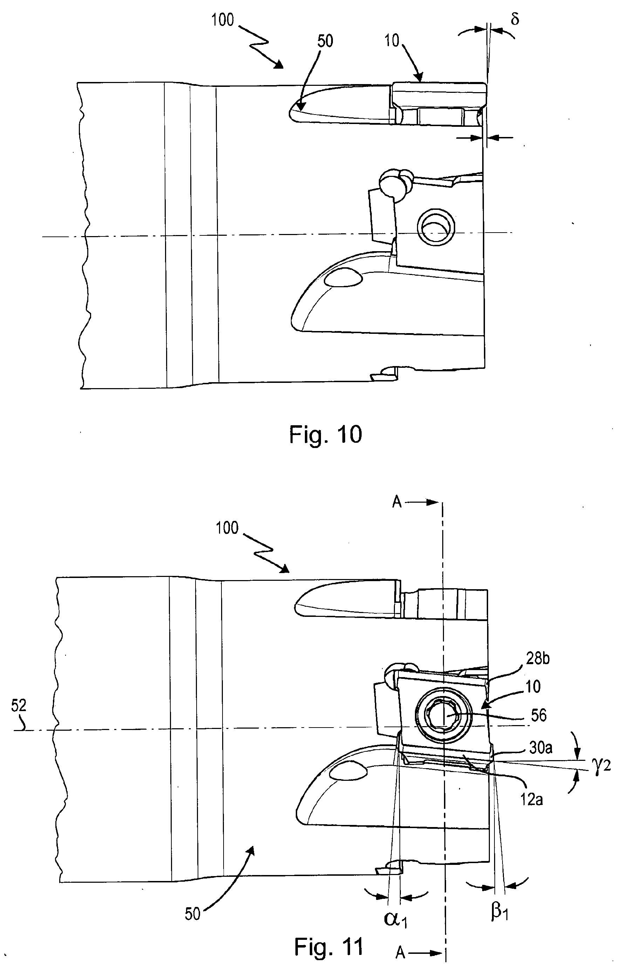

Um die Freilaufeigenschaften zu gewährleisten, ist es insbesondere bevorzugt, dass der erste Freiwinkel α größer ist als der zweite Freiwinkel β. Es versteht sich, dass je nach Ausrichtung des Schneideinsatzes 10 im Werkzeughalter diese Freiwinkel α, β sich ohnehin verändern. Bei einer unter einem Axialwinkel γ₂ im Werkzeughalter leicht verdreht angeordneten Schneidplatte, wie dies beispielhaft in Fig.11 dargestellt ist, verschiebt sich die Größe der beiden radialen Freiwinkel α und β ohnehin dahingehend, dass der in Fig. 11 eingezeichnete Winkel α₁ kleiner ist als der in Fig. 2 dargestellte Winkel α und der in Fig. 11 dargestellte Winkel β₁ größer ist als der in Fig. 2 dargestellte Winkel β.

Im Übrigen sind die ersten und zweiten Freiflächen 42a-d bzw. 44a-d auch gegenüber der Bohrungsachse 14 geneigt (also nicht parallel zu dieser), wodurch insbesondere der in Fig. 10 dargestellte weitere Freiwinkel δ erzeugt wird. Somit kommt es weder in axialer noch in radialer Richtung zu unerwünschten Kollisionen mit den übrigen Bauteilen des Schneideinsatzes 10.

Ein weiterer zentraler Erfindungsgedanke wird durch die charakteristische Form des Schneideinsatzes 10 erzeugt. Wie insbesondere aus der in Fig. 2 dargestellten Draufsicht ersichtlich ist, weist der Schneideinsatz 10 in der Draufsicht im Wesentlichen die Form eines Rhomboids auf. Insbesondere weisen die stirnseitigen Grundflächen 16a, b jedes Teilkörpers 20a, b die Form eines Rhomboids auf. Es versteht sich, dass weder der Schneideinsatz 10 insgesamt noch die Grundflächen 16a, b exakt einem Rhomboid entsprechen, jedoch im Wesentlichen dieser Form gleichen. Neben den parallelen Eigenschaften gegenüberliegender Seiten ist vorliegend im Wesentlichen das charakteristische Merkmal eines Rhomboids erfüllt, nämlich dass benachbarte Seiten einen Winkel von ≠ 90° miteinander einschließen. Wie aus Fig. 2 ersichtlich ist, schließt beispielsweise die Hauptschneide 12a mit der Anlagefläche 32b einen Winkel ε ein, welcher kleiner als 90° ist. Vorzugsweise ist dieser Winkel ε im Bereich von 80°.

Ein weiteres zentrales Merkmal des erfindungsgemäßen Schneideinsatzes 10 besteht darin, dass die Hauptschneiden 12a-d des einen Teilkörpers 20a, b parallel zu den Anlageflächen 32a-d des jeweils anderen Teilkörpers 20a, b verlaufen. Wie sich beispielsweise aus Fig. 2 entnehmen lässt, verläuft die Hauptschneide 12a des Teilkörpers 20a parallel zu der Anlagefläche 32a des Teilkörpers 20b. Genauso verläuft auch die Hauptschneide 12c des Teilkörpers 20a parallel zu der Anlagefläche 32c des Teilkörpers 20b. Sowohl aus Fig. 2 als auch aus Fig. 5 lässt sich zudem entnehmen, dass die Hauptschneiden 12a-d gegenüber den Anlageflächen 32a-d nach innen, in Richtung zur zentralen Bohrungsachse 14 versetzt sind. Die Anlageflächen 32a-c haben also mit anderen Worten einen größeren Abstand von der Bohrungsachse 14 als die Hauptschneiden 12a-c.

Weiterhin sind die Hauptschneiden 12a-d auch gegenüber den Grundflächen 16a, b leicht höhenversetzt (siehe beispielsweise Fig. 4). Der Abstand der Hauptschneiden 12a-d von der Mittelebene 11 ist nämlich kleiner als der Abstand, den die Grundflächen 16a, b von dieser Mittelebene 11 aufweisen. Aufgrund dieses Höhenversatzes entstehen zwischen den Hauptschneiden 12a-d und den Grundflächen 16a, b desselben Teilkörpers 20a, b daher jeweils Hauptfreiflächen 46a-d.

In Fig. 7 ist der jeweilige durch die Hauptfreiflächen 46a-d entstehende Freiwinkel τ₁ am Beispiel der Hauptfreifläche 46a vergrößert dargestellt. Gemäß einer bevorzugten Ausgestaltung der vorliegenden Erfindung liegt dieser Winkel im Bereich von 0,5 bis 10°, insbesondere im Bereich von 5° oder exakt 5°. Des Weiteren ist der in Fig. 7 dargestellten vergrößerten Ansicht zu entnehmen, dass an jede Hauptschneide 12a-d sich auf der zugehörigen Hauptseite 18a-d jeweils eine Spanfläche 48a-d anschließt, über welche der während der Bearbeitung entstehende Span abfließen kann. Durch diese relativ zur Bohrungsachse 14 geneigten Spanflächen 48a-d wird vorzugsweise ein Spanwinkel τ₂ im Bereich von 0 bis 40°, vorzugsweise im Bereich von 15° bis 25°, oder insbesondere von exakt 22°, erzeugt.

Die Fig. 8 bis 12 zeigen beispielhaft ein erfindungsgemäßes Werkzeug, in dem der erfindungsgemäße Schneideinsatz 10 typischerweise Verwendung findet. Das Werkzeug ist in diesen Figuren gesamthaft mit der Bezugsziffer 100 bezeichnet.

Das beispielhaft dargestellte Werkzeug ist hierbei als typisches Tangentialfräswerkzeug 100 dargestellt. Dieses Tangentialfräswerkzeug 100 weist einen Werkzeughalter 50 auf, welcher rotationssymmetrisch um eine Drehachse 52 ausgestaltet ist. Am Werkzeughalter 50 ist umfangsseitig mindestens eine, vorzugsweise eine Vielzahl von Schneideinsatzaufnahmen 54 (im Detail in Fig. 8 dargestellt) vorgesehen, welche als Aufnahme für jeweils einen Schneideinsatz 10 fungieren. In den Fig. 9 bis 12 ist beispielhaft jeweils ein Schneideinsatz 10 eingesetzt. Dieser Schneideinsatz 10 ist vorzugsweise mit einer Schraube 56 am Werkzeughalter 50 lösbar befestigt.

Aus Fig. 8 werden die konstruktiven Details der Schneideinsatzaufnahme 54 ersichtlich. Die Schneideinsatzaufnahme 54 weist jeweils Anlageflächen 58 und 60 auf, an denen der Schneideinsatz 10 mit seinen Anlageflächen 32a-d am Werkzeughalter 50 anliegt. Eine weitere im Grund der Schneideinsatzaufnahme 54 angeordnete Grundfläche 62 dient als Auflagefläche, auf der der Schneideinsatz 10 mit einer seiner stirnseitigen Grundflächen 16a, b aufliegt. Die Anlageflächen 58 und 60 sind vorzugsweise orthogonal zu der Grundfläche 62 ausgestaltet. Auf diese Weise wird ein mechanisch stabiler und eindeutig definierter Plattensitz realisiert.

Fig. 11 verdeutlicht nochmals die Anordnung der Schneidplatte 10 innerhalb des Werkzeughalters 50. Daraus ist ersichtlich, dass der Schneideinsatz 10 um seine Bohrungsachse um einen Winkel γ₂ im Werkzeughalter 50 verdreht angeordnet ist. Dieser Winkel γ₂ wird auch als Axialwinkel bezeichnet. Genauer gesagt ist dies der Winkel, den die zur Bearbeitung verwendete Hauptschneide 12a mit der Axialrichtung des Werkzeughalters 50 einschließt. Bedingt durch den Winkel ε und den geringen Verdrehwinkel in axialer Richtung γ₁, (siehe bspw. Fig. 2) ergibt sich ein (relativ) großer Axialwinkel γ₂ (γ₁<y₂). Ein großer Axialwinkel γ₂ ist bei dieser Konstruktion erwünscht, um einen möglichst positiven (weichen) Schnitt zu erzielen. Die Konturabweichung (Abweichung der am Werkstück entstehenden Schnittkontur von der Schneidenkontur des Schneideinsatzes) steht bei dieser Art von Schneideinsatz nicht im Vordergrund, sollte aber auch nicht zu groß sein.

Ebenso ist aus Fig. 10 ersichtlich, dass durch die in den Vorsprüngen 30a-d eingeformten Freiflächen 44a-d ein weiterer Freiwinkel δ erzeugt wird, welcher den radialen Freilauf garantiert.

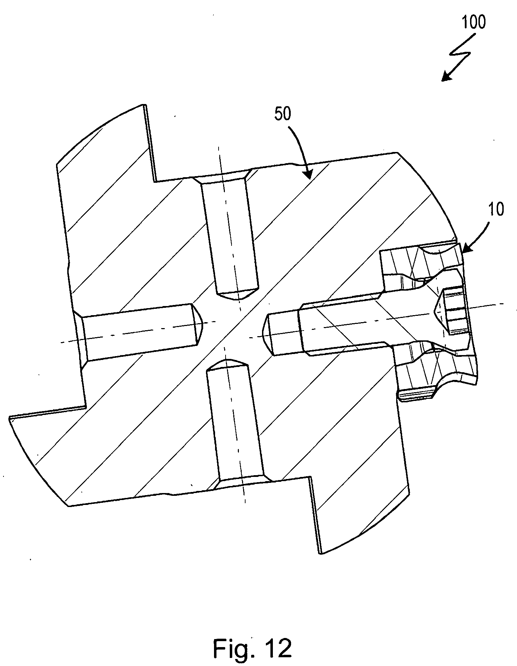

Der Vollständigkeit halber sei noch erwähnt, dass Fig. 12 den in Fig. 11 gekennzeichneten Schnitt A-A darstellt.

Zusammenfassend lässt sich also sagen, dass es den Erfindern gelungen ist, einen alternativen vierschneidigen Tangentialschneideinsatz bereitzustellen, welcher aufgrund seiner relativ einfach ausgestalteten Schneidengeometrie einfach und kostengünstig zu fertigen ist und dennoch eine hohe Bearbeitungsgenauigkeit aufweist. Die für die Freilaufeigenschaften notwendigen Freiwinkel werden durch so genannte "Nasen" gebildet, welche vorliegend als Vorsprünge bezeichnet sind. Dadurch gelingt es, ohne unerwünschte Kollisionen das Werkstück auch mit den Schneidkantenecken zu bearbeiten.

## Patentansprüche

1. Schneideinsatz für ein Werkzeug zur spanenden Bearbeitung eines Werkstücks, wobei der Schneideinsatz (10) um eine Bohrungsachse (14), welche senkrecht und zentral durch zwei gegenüberliegende, identische Grundflächen (16a,b) des Schneideinsatzes (10) verläuft, 180° drehsymmetrisch ist und zwei identische Teilkörper (20a,b) aufweist, welche entlang einer Mittelebene (11) miteinander verbunden sind, wobei diese Mittelebene (11) orthogonal zur Bohrungsachse (14) verläuft und jeweils den gleichen Abstand zu beiden Grundffächen (16a,b) hat, wobei jeder Teilkörper (20a,b) zwei identische einander gegenüberliegende Hauptseiten (22a-d) und zwei identische einander gegenüberliegende Nebenseiten (24a-d) aufweist, wobei an jeder Hauptseite (22a-d) jeweils eine geradlinige, parallel zur Mittelebene (11) verlaufende Hauptschneide (12a-d) angeordnet ist **dadurch gekennzeichnet, dass** jede Nebenseite (24a-d) eine planare, orthogonal zur Mittelebene verlaufende Anlagefläche (32a-d) aufweist, wobei die beiden Hauptschneiden (12a-d) jedes Teilkörpers (20a,b) parallel zueinander und quer zu den beiden Hauptschneiden (12a-d) des jeweils anderen Teilkörpers (20a,b) verlaufen, und wobei die beiden Hauptschneiden (12a-d) jedes Teilkörpers (20a,b) parallel zu den beiden Anlageflächen (32a-d) des jeweils anderen Teilkörpers (20a,b) verlaufen, wobei jede Hauptschneide (12a-d) an ihrem jeweiligen ersten Ende (38a-d) in eine erste Teilschneide (34a-d) übergeht, welche an einem an der benachbarten Nebenseite (24a-d) desselben Teilkörpers (20a,b) vorgesehenen ersten Vorsprung (28a-d) angeordnet ist, und wobei jede Hauptschneide (12a-d) an ihrem jeweiligen zweiten, dem ersten gegenüberliegenden Ende (40a-d) in eine zweite Teilschneide (36a-d) übergeht, welche an einem an der jeweils anderen benachbarten Nebenseite (24a-d) desselben Teilkörpers (20a,b) vorgesehenen zweiten Vorsprung (30a-d) angeordnet ist, wobei die ersten und die zweiten Vorsprünge (28a-d; 30a-d) jeweils an die an derselben Nebenseite (24a-d) angeordnete Anlagefläche (32a-d) angrenzen und gegenüber dieser hervorstehen.

2. Schneideinsatz nach Anspruch 1, wobei der Schneideinsatz (10) genau vier identische Hauptschneiden (12a-d) aufweist.

3. Schneideinsatz nach Anspruch 1, wobei der Schneideinsatz (10) in einer Draufsicht entlang der Bohrungsachse (14) betrachtet im Wesentlichen die Form eines Rhomboids hat.

4. Schneideinsatz nach einem der vorstehenden Ansprüche, wobei die beiden identischen, sich gegenüberliegenden Grundflächen (16a,b) des Schneideinsatzes (10) jeweils planar ausgestaltet sind und im Wesentlichen die Form eines Rhomboids aufweisen.

5. Schneideinsatz nach einem der vorstehenden Ansprüche, wobei sich einer der beiden Teilkörper (20a,b) durch Rotation um 180° um eine in der Mittelebene liegende Drehachse und einer anschließenden Rotation um einen Hauptschneidenwinkel um die Bohrungsachse (14) auf den jeweils anderen Teilkörper (20a,b) abbilden lässt, wobei der Hauptschneidenwinkel der Winkel ist, welchen die Hauptschneiden (12a-d) eines Teilkörpers (20a,b) mit den Hauptschneiden (12a-d) des jeweils anderen Teilkörpers (20a,b) einschließen.

6. Schneideinsatz nach einem der vorstehenden Ansprüche, wobei die ersten Vorsprünge (28a-d) größer ausgestaltet sind als die zweiten Vorsprünge (30a-d).

7. Schneideinsatz nach einem der vorstehenden Ansprüche, wobei jeder erste Vorsprung (28a-d) jeweils eine erste Freifläche (42a-d) aufweist, welche an eine erste Nebenschneide angrenzt und an der jeweiligen ersten Nebenschneide einen ersten Freiwinkel (α) erzeugt.

8. Schneideinsatz nach einem der vorstehenden Ansprüche, wobei jeder zweite Vorsprung (30a-d) jeweils eine zweite Freifläche (44a-d) aufweist, welche an eine zweiten Nebenschneide angrenzt und an der jeweiligen zweiten Nebenschneide einen zweiten Freiwinkel (β) erzeugt.

9. Schneideinsatz nach den Ansprüchen 7 und 8, wobei die erste Freifläche (42a-d) größer ist als die zweite Freifläche (44a-d) und wobei der erste Freiwinkel (α) größer ist als der zweite Freiwinkel (β).

10. Schneideinsatz nach einem der vorstehenden Ansprüche, wobei alle vier Hauptschneiden (12a-d) des Schneideinsatzes (10) jeweils einen ersten Abstand von der Bohrungsachse (14) haben und alle vier Anlageflächen (32a-d) des Schneideinsatzes jeweils einen zweiten Abstand von der Bohrungsachse (14) haben, und wobei der erste Abstand kleiner ist als der zweite Abstand.

11. Schneideinsatz nach einem der vorstehenden Ansprüche, wobei die Hauptschneiden (12a-d) einen geringeren Abstand von der Mittelebene (11) haben als die Grundflächen (16a,b).

12. Schneideinsatz nach einem der vorstehenden Ansprüche, wobei die beiden Hauptschneiden (12a-d) jedes Teilkörpers (20a,b) jeweils in einer gemeinsamen Hauptschneiden-Ebene liegen, welche parallel zur Mittelebene (11) verläuft, und wobei zwischen den beiden Hauptschneiden (12a-d) jedes Teilkörpers (20a,b) und der Grundfläche (16a,b) desselben Teilkörpers (20a,b) jeweils eine im Wesentlichen planare Hauptfreifläche (46a-d) vorgesehen ist, welche gegenüber der jeweiligen Hauptschneiden-Ebene geneigt ist.

13. Werkzeug zur spanenden Bearbeitung eines Werkstücks, insbesondere zum Tangentialfräsen, mit einem Werkzeughalter (50), welcher mindestens eine Schneideinsatzaufnahme (54) aufweist, in der ein Schneideinsatz (10) nach einem der Ansprüche 1 bis 12 lösbar befestigt ist.

14. Werkzeug nach Anspruch 13, wobei der mindestens eine Schneideinsatz (10) nach einem der Ansprüche 1 bis 12 in der Schneideinsatzaufnahme (54) derart um eine Radialrichtung des Werkzeughalters (50) um einen definierten Schneidenverdrehwinkel (γ) verdreht angeordnet ist, dass die zur Bearbeitung verwendete Hauptschneide (12a) diesen Schneidenverdrehwinkel (γ) mit einer Ebene einschließt, welche durch die Radialrichtung und eine Drehachse (52) des Werkzeughalters (50) definiert ist.

## Claims

1. A cutting insert for a tool for machining a workpiece, wherein the cutting insert (10) has a 180° rotational symmetry about a bore axis (14) extending perpendicularly and centrally through two opposing, identical base surfaces (16a, b) of the cutting insert (10), and has two identical part-bodies (20a, b) which are connected along a center plane (11), wherein said center plane (11) extends orthogonally to the bore axis (14) and has the same distance from each of the two base surfaces (16a, b), wherein each part-body (20a, b) has two identical mutually opposite main sides (22a-d) and two identical mutually opposite secondary sides (24a-d), wherein each main side (22a-d) has a rectilinear main cutting edge (12a-d) extending parallel to the center plane (11), **characterized in that** each secondary side (24a-d) has a planar bearing surface (32a-d) extending orthogonally to the center plane, wherein the two main cutting edges (12a-d) of each part-body (20a, b) extend parallel to one another and transversely to the two main cutting edges (12a-d) of the respective other part-body (20a, b), and wherein the two main cutting edges (12a-d) of each part-body (20a, b) extend parallel to the two bearing surfaces (32a-d) of the respective other part-body (20a, b), wherein each main cutting edge (12a-d) transitions at its respective first end (38a-d) into a first segmental cutting edge (34a-d) which is arranged on a first protrusion (28a-d) provided on an adjacent secondary side (24a-d) of the respective part-body (20a, b), and wherein each main cutting edge (12a-d) transitions into a second segmental cutting edge (36a-d) at its respective second end (40a-d), opposite the first end, which is arranged on a second protrusion (30a-d) provided on the respective other adjacent secondary side (24a-d) of the respective part-body (20a, b), wherein the first and the second protrusions (28a-d; 30a-d) each adjoin the bearing surface (32a-d) arranged on the respective same secondary side (24a-d) and project with respect to said bearing surface (32a-d).

2. The cutting insert as claimed in claim 1, wherein the cutting insert (10) has exactly four identical main cutting edges (12a-d).

3. The cutting insert as claimed in claim 1, wherein the cutting insert (10) is substantially rhomboidal when viewed in plan view along the bore axis (14).

4. The cutting insert as claimed in one of the preceding claims, wherein the two identical, mutually opposite base surfaces (16a, b) of the cutting insert (10) are each configured to be planar and substantially rhomboidal.

5. The cutting insert as claimed in one of the preceding claims, wherein one of the two part-bodies (20a, b) may be mapped onto the respective other part-body (20a, b) by rotation through 180° about a rotation axis located in the center plane followed by rotation through a main cutting edge angle about the bore axis (14), wherein the main cutting edge angle is an angle which the main cutting edges (12a-d) of one part-body (20a, b) enclose with the main cutting edges (12a-d) of the respective other part-body (20a, b).

6. The cutting insert as claimed in one of the preceding claims, wherein the first protrusions (28a-d) are configured larger than the second protrusions (30a-d).

7. The cutting insert as claimed in one of the preceding claims, wherein each of the first protrusions (28a-d) has a first flank (42a-d) which adjoins a first secondary cutting edge and creates a first clearance angle (α) at the respective first secondary cutting edge.

8. The cutting insert as claimed in one of the preceding claims, wherein each of the second protrusions (30a-d) has a second flank (44a-d) which adjoins a second secondary cutting edge and creates a second clearance angle (β) at the respective second secondary cutting edge.

9. The cutting insert as claimed in claims 7 and 8, wherein the first flank (42a-d) is larger than the second flank (44a-d) and wherein the first clearance angle (α) is larger than the second clearance angle (β).

10. The cutting insert as claimed in one of the preceding claims, wherein all four main cutting edges (12a-d) of the cutting insert (10) are each at a first distance from the bore axis (14) and all four bearing surfaces (32a-d) of the cutting insert are each at a second distance from the bore axis (14), and wherein the first distance is smaller than the second distance.

11. The cutting insert as claimed in one of the preceding claims, wherein the main cutting edges (12a-d) are at a smaller distance from the center plane (11) than the base surfaces (16a, b).

12. The cutting insert as claimed in one of the preceding claims, wherein the two main cutting edges (12a-d) of each part-body (20a, b) are located in a respective common main cutting edge plane which extends parallel to the center plane (11), and wherein a substantially planar main flank (46a-d) is provided locally in between each of the two main cutting edges (12a-d) of each part-body (20a, b) and the base surface (16a, b) of the same part-body (20a, b), respectively, each main flank (46a-d) being inclined with respect to the respective main cutting edge plane of the same part-body (20a, b).

13. A tool for machining a workpiece, in particular for tangential milling, having a tool holder (50) which has at least one cutting-insert receptacle (54) in which a cutting insert (10) as claimed in one of claims 1 to 12 is releasably fastened.

14. The tool as claimed in claim 13, wherein the at least one cutting insert (10) as claimed in one of claims 1 to 12 is arranged in the cutting-insert receptacle (54) in a manner twisted through a defined cutting edge twist angle (γ) about a radial direction of the tool holder (50) such that the main cutting edge (12a) used for machining encloses this cutting edge twist angle (γ) with a plane which is defined by the radial direction and a rotation axis (52) of the tool holder (50).

## Revendications

1. Insert de coupe pour un outil pour l'usinage par enlèvement de copeaux d'une pièce usinée, l'insert de coupe (10) s'étendant autour d'un axe d'alésage (14), s'étendant verticalement et centralement à travers deux surfaces de base (16a, b), identiques opposées, de l'insert de coupe (10), cet insert étant symétrique en rotation sur 180° et comportant deux corps partiels (20a, b) identiques reliés entre eux le long d'un plan médian (11), ce plan médian (11) s'étendant perpendiculairement à l'axe d'alésage (14) et présentant respectivement la même distance par rapport aux deux surfaces de base (16a, b), chaque corps partiel (20a, b) comportant deux côtés principaux (22a-d) identiques opposés l'un par rapport à l'autre et deux côtés secondaires (24a-d) identiques opposés l'un par rapport à l'autre, une lame principale (12a-d) s'étendant en ligne droite, parallèlement au plan médian (11), étant respectivement disposée au niveau de chaque côté principal (22a-d), **caractérisé en ce que** chaque côté secondaire (24a-d) comporte une surface d'appui (32a-d) plane s'étendant perpendiculairement au plan médian, les deux lames principales (12a-d) de chaque corps partiel (20a, b) s'étendant parallèlement l'une par rapport à l'autre et transversalement aux deux lames principales (12a-d) du respectivement autre corps partiel (20a, b) et les deux lames principales (12a-d) de chaque corps partiel (20a, b) s'étendant parallèlement aux deux surfaces d'appui (32a-d) du respectivement autre corps partiel (20a, b), chaque lame principale (12a-d) se transformant au niveau de sa première extrémité (38a-d) respective en une première lame partielle (34a-d) disposée au niveau d'une première saillie (28a-d) prévue au niveau du côté secondaire (24a-d) connexe du même corps partiel (20a, b) et chaque lame principale (12a-d) se transformant au niveau de sa deuxième extrémité (40a-d) respective opposée à la première extrémité en une deuxième lame partielle (36a-d), ladite deuxième lame étant disposée au niveau d'une deuxième saillie (30a-d) au niveau du respectivement autre côté secondaire (24a-d) connexe du même corps partiel (20a, b), les première et deuxième saillies (28a-d ; 30a-d) avoisinant respectivement la surface d'appui (32a-d) disposée au niveau du même côté secondaire (24a-d) et saillant par rapport à elle.

2. Insert de coupe selon la revendication 1, l'insert de coupe (10) comportant précisément quatre lames principales (12a-d) identiques.

3. Insert de coupe selon la revendication 1, l'insert de coupe (10) prenant, dans une vue en élévation prise le long de l'axe d'alésage (14), pour l'essentiel la forme d'un rhomboïde.

4. Insert de coupe selon l'une quelconque des revendications précédentes, les deux surfaces de base (16a, b) identiques, opposées l'une par rapport à l'autre, de l'insert de coupe (10) étant respectivement configurées de façon planes et prenant pour l'essentiel la forme d'un rhomboïde.

5. Insert de coupe selon l'une quelconque des revendications précédentes, un des deux corps partiels (20a, b) se laissant représenter par rotation de 180° autour d'un axe de rotation placé dans le plan médian et par une rotation connexe autour d'un angle de lame principale autour de l'axe d'alésage (14) sur le respectivement autre corps partiel (20a, b), l'angle de lame principale étant l'angle incluant les lames principales (12a-d) d'un corps partiel (20a, b) avec les lames principales (12a-d) du respectivement autre corps partiel (20a, b).

6. Insert de coupe selon l'une quelconque des revendications précédentes, les premières saillies (28a-d) étant réalisées plus grandes que les deuxièmes saillies (30a-d).

7. Insert de coupe selon l'une quelconque des revendications précédentes, chaque première saillie (28a-d) comportant respectivement une première surface libre (42a-d) avoisinant une première lame secondaire et engendrant au niveau de la première lame secondaire respective un premier angle d'incidence (α).

8. Insert de coupe selon l'une quelconque des revendications précédentes, chaque deuxième saillie (30a-d) comportant respectivement une deuxième surface libre (44a-d) avoisinant une deuxième lame secondaire et engendrant au niveau de la deuxième lame secondaire respective un deuxième angle d'incidence (β).

9. Insert de coupe selon les revendications 7 et 8, la première surface libre (42a-d) étant plus grande que la deuxième surface libre (44a-d) et le premier angle d'incidence (α) étant plus grand que le deuxième angle d'incidence (β).

10. Insert de coupe selon l'une quelconque des revendications précédentes, les quatre lames principales (12a-d) de l'insert de coupe (10) présentant respectivement une première distance par rapport à l'axe d'alésage (14) et les quatre surfaces d'appui (32a-d) de l'insert de coupe présentant respectivement une deuxième distance par rapport à l'axe d'alésage (14) et la première distance étant inférieure à la deuxième distance.

11. Insert de coupe selon l'une quelconque des revendications précédentes, les lames principales (12a-d) présentant une distance davantage réduite par rapport au plan médian (11) que les surfaces de base (16a, b).

12. Insert de coupe selon l'une quelconque des revendications précédentes, les deux lames principales (12a-d) de chaque corps partiel (20a, b) se plaçant respectivement dans un plan de lame principale commun s'étendant parallèlement au plan médian (11) entre les deux lames principales (12a-d) de chaque corps partiel (20a, b) et la surface de base (16a, b) du même corps partiel (20a, b) et une surface libre principale (46a-d) pour l'essentiel plane étant respectivement prévue, cette surface étant inclinée par rapport au plan de lame principale respectif.

13. Outil pour l'usinage par enlèvement de copeaux d'une pièce usinée, notamment pour le fraisage tangentiel, avec un porte-outil (50) comportant au moins un logement d'insert de coupe (54) dans lequel un insert de coupe (10) selon l'une quelconque des revendications 1 à 12 est fixé de façon amovible.

14. Outil selon la revendication 13, l'au moins un insert de coupe (10) selon l'une quelconque des revendications 1 à 12 étant disposé de façon à pouvoir tourner dans le logement d'insert de coupe (54) de telle sorte, autour d'une direction radiale du porte-outil (50), selon un angle de rotation de lame (γ) défini, que la lame principale (12a) servant à l'usinage inclut cet angle de rotation de lame (γ) avec un plan défini à travers la direction radiale et un axe de rotation (52) du porte-outil (50).
